# EUROPEAN PATENT APPLICATION

(11) **EP 4 207 343 A1**
(43) Date of publication of application: **05.07.2023**
(21) Application number: 21861462.6
(22) Date of filing: 23.08.2021
(51) Int. Cl.: H01M 4/13, H01M 4/133, H01M 4/36, H01M 4/62, H01M 10/052, H01M 10/0567, H01M 10/0569

(54) **NONAQUEOUS ELECTROLYTE SECONDARY BATTERY**

(30) Priority: 31.08.2020 JP 2020146134
(71) Applicant: Panasonic Intellectual Property Management Co., Ltd., Osaka-shi, Osaka 540-6207 (JP)
(72) Inventor: ISHIGURO, Tasuku, Chuo-ku, Osaka-shi, Osaka 540-6207 (JP); FUJITOMO, Chisaki, Chuo-ku, Osaka-shi, Osaka 540-6207 (JP)
(74) Representative: Novagraaf International SA
(86) International application number: PCT/JP2021/030717
(87) International publication number: WO 2022/045036

(57) **Abstract**

A non-aqueous electrolyte secondary battery includes a positive electrode, a separator, a negative electrode facing the positive electrode with the separator interposed therebetween, and an electrolyte; the electrolyte includes an acid anhydride; the negative electrode includes a negative electrode mixture including a negative electrode active material and a carbon nanotube; and the negative electrode active material includes a silicon-containing material and a carbon material.

## Description

### [Technical Field]

The present disclosure relates to non-aqueous electrolyte secondary batteries.

### [Background Art]

Non-aqueous electrolyte secondary batteries represented by lithium ion secondary batteries include a positive electrode, a negative electrode, and a non-aqueous electrolyte. For the non-aqueous electrolyte, a non-aqueous liquid electrolyte is mainly used. The negative electrode includes a negative electrode mixture containing a negative electrode active material capable of electrochemically storing and releasing lithium ions. For the negative electrode active material, a material that electrochemically stores and releases lithium ions is used. For such a material, for example, a carbon material, a silicon-containing material, and the like are used. To the negative electrode mixture, a carbon material that does not store and release lithium ions such as carbon fiber, carbon nanotube, and the like is sometimes added.

Patent Literature 1 has proposed using a composite electrode material including particles containing an element capable of storing and releasing lithium ions, carbon particles capable of storing and releasing lithium ions, multi-wall carbon tube, and carbon nanofiber for lithium ion secondary batteries.

Patent Literature 2 has proposed using an electrode produced as follows for lithium ion batteries: dry mixing an active material, carbon fiber with a fiber diameter of 50 nm or more and 300 nm or less, a carbon fiber with a fiber diameter of 5 nm or more and 400 nm or less, carbon black, and a binder to obtain a mixture; kneading the mixture with a liquid medium added to the mixture; and forming the kneaded material into a sheet.

### [Citation List]

### [Patent Literature]

PLT1: Japanese Laid-Open Patent Publication No. 2014-146519
PLT2: Japanese Laid-Open Patent Publication No. 2014-160590

### [Summary of Invention]

The silicon-containing material goes through a great volume change with storing and releasing of lithium ions. Therefore, use of a silicon-containing material for the negative electrode active material causes breakage of the conductive path among the negative electrode active material particles to isolate the negative electrode active material particles, which may reduce cycle characteristics.

Combining the negative electrode active material containing a silicon-containing material with carbon nanotube allows for easily securing the conductivity among the negative electrode active material particles at the initial stage of charge/discharge cycles. Meanwhile, use of carbon nanotubes increases the use rate of the negative electrode, increasing expansion and contraction of the negative electrode active material, which causes the negative electrode active material to easily crack. Thus, performing charge/discharge cycles under high temperature for a long time gradually increases side reactions, causing significant electrolyte consumption.

An aspect of the present disclosure relates to a non-aqueous electrolyte secondary battery including a positive electrode, a separator, a negative electrode facing the positive electrode with the separator interposed therebetween, and an electrolyte, wherein the electrolyte includes an acid anhydride, the negative electrode includes a negative electrode mixture including a negative electrode active material and a carbon nanotube, and the negative electrode active material includes a silicon-containing material and a carbon material.

The present disclosure allows for suppression of a decrease in electrolyte when non-aqueous electrolyte secondary batteries repeatedly go through charge/discharge cycles under high temperature for a long time, and improvement in capacity retention rate.

### [Brief Description of Drawings]

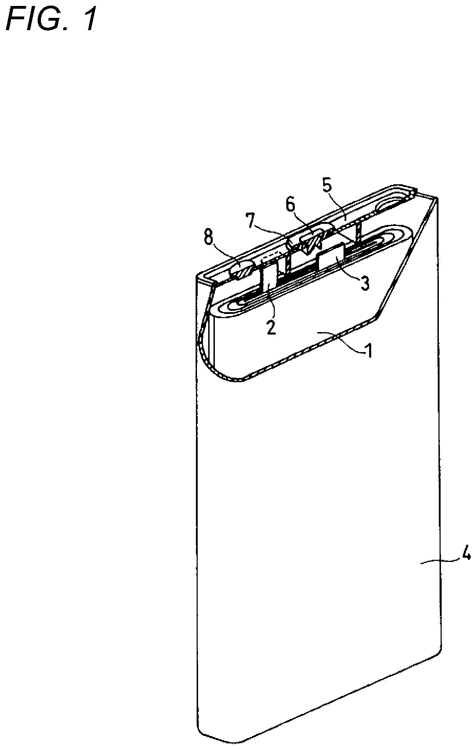

[FIG.1] FIG.1 is a partially cutaway oblique view of a non-aqueous electrolyte secondary battery of an embodiment of the present disclosure.

### [Description of Embodiments]

A non-aqueous electrolyte secondary battery of the present disclosure has a positive electrode, a separator, a negative electrode facing the positive electrode with the separator interposed therebetween, and an electrolyte. The negative electrode includes a negative electrode mixture, and the negative electrode mixture includes a negative electrode active material and a carbon nanotube. The negative electrode active material includes a silicon-containing material and a carbon material. In the following, the silicon-containing material may be referred to as a Si-containing material, and the carbon nanotube may be referred to as CNT.

The electrolyte includes an acid anhydride. The acid anhydride quickly reacts with the negative electrode active material. When the negative electrode active material cracks in the process of charge/discharge cycles, the acid anhydride quickly reacts to form a low-resistance protective coating at a new surface produced by the cracking. The quick protection of the newly created surface suppresses further side reactions involving the decomposition of the electrolyte to progress. Thus, by including the Si-containing material and CNT, even if the cracks of the negative electrode active material are easily caused by expansion and contraction, the consumption of electrolyte is suppressed. As a result, even if charge/discharge cycles are performed at high temperature for a long time, the capacity retention rate can be significantly improved.

When the negative electrode mixture not containing CNT is used, the acid anhydride has almost no contribution to the suppression for the electrolyte consumption, and does not greatly contribute to the improvement in capacity retention rate when charge/discharge cycles are performed at high temperature for a long time. However, when the electrolyte including an acid anhydride is used in combination with the negative electrode mixture including CNT, upon performing the charge/discharge cycles at high temperature for a long time, the electrolyte reduction is significantly suppressed, and significant improvement in capacity retention rate is seen.

In a non-aqueous electrolyte secondary battery of the present disclosure, use of CNT allows for improvement in capacity retention rate at an initial stage of charge/discharge cycles. Furthermore, using an acid anhydride allows for improvement in capacity retention rate even if charge/discharge cycles are performed at high temperature for a long time.

The electrolyte contains an acid anhydride of, for example, 5 mass% or less, or 3 mass% or less. When the acid anhydride content is in such a range, the effects of forming a protective coating at newly formed surfaces caused by cracking of the negative electrode active material last for a long time without damaging the functions necessary for the electrolyte. Thus, when performing charge/discharge cycles at high temperature for a long time, reduction of electrolytes can be further suppressed. For a further suppression of the electrolyte reduction, the electrolyte preferably has an acid anhydride content of 2 mass% or less.

In the non-aqueous electrolyte secondary battery, the acid anhydride content in the electrolyte changes during their storage or charge/discharge cycles. Therefore, in the electrolyte taken out from the non-aqueous electrolyte secondary battery, the acid anhydride remaining at a concentration of a detection limit or more will suffice. The acid anhydride content in the electrolyte may be 0.01 mass% or more, 0.1 mass% or more, or 0.5 mass% or more.

Meanwhile, the acid anhydride content in the electrolyte used for non-aqueous electrolyte secondary battery production may be 0.1 mass% or more, 0.3 mass% or more, or 0.5 mass% or more. The electrolyte used for non-aqueous electrolyte secondary battery production has an acid anhydride content of, for example, 5 mass% or less, 3 mass% or less, or 2 mass% or less. These lower limit values and upper limit values can be combined arbitrarily.

The type of the acid anhydride is not particularly limited, but preferably is an acid anhydride including a carbon-carbon unsaturated bond, in view of the fact that it quickly reacts to form a protective coating at newly formed surfaces generated by cracking of the negative electrode active material.

The molecule of the acid anhydride preferably has a simple structure as much as possible, in view of effectively using the constituent element of the molecule as much for the formation of the protective coating. For such acid anhydride, maleic anhydride, succinic anhydride, acetic anhydride, phthalic anhydride, and benzoic anhydride are used. In particular, maleic anhydride and succinic anhydride are preferable, in view of excellent balance of stability and reactivity, and capability of formation of a lower resistance coating. The acid anhydride may be used singly, or may be used in combination of two or more.

The content of the components in the electrolyte can be determined, for example, using gas chromatography under the following conditions.
Measurement device: GC-2010 Plus manufactured by SHIMADZU CORPORATION
Column: HP-1(1 µm × 60 m) manufactured by J&W
Linear velocity: 30.0 cm/sec
Injection port temperature: 270°C
Detection vessel: FID 290°C (sens.10¹)

In the following, a non-aqueous electrolyte secondary battery of the present disclosure is described element by element in detail.

### (Negative Electrode)

A negative electrode includes a negative electrode mixture. The negative electrode may include a negative electrode mixture, and a negative electrode current collector that holds the negative electrode mixture. The negative electrode generally includes a layered negative electrode mixture (hereinafter, referred to as negative electrode mixture layer). The negative electrode mixture includes the negative electrode active material and CNT. The negative electrode mixture may further include a binder, a thickener, and a conductive material other than CNT.

### (Negative electrode active material)

The negative electrode active material includes a Si-containing material and a carbon material. The carbon material has a smaller degree of expansion and contraction during charging and discharging compared with the Si-containing material. By combining the Si-containing material with the carbon material, upon repetitive charge/discharge, the contact state among the negative electrode active material particles, and between the negative electrode mixture and the negative electrode current collector can be excellently kept. Thus, by combining the carbon material with the Si-containing material, while keeping the high capacity of the Si-containing material, excellent cycle characteristics can be easily secured. The negative electrode active material may include, as necessary, other negative electrode active materials than the Si-containing material and the carbon material. Examples of the other negative electrode active materials include at least one selected from the group consisting of a Sn single element, Sn alloy, and Sn compound such as Sn oxide.

### (Si-containing material)

Examples of the Si-containing material include a Si simple substance, silicon alloy, and silicon compound (silicon oxide, etc.), and a composite material in which a silicon phase (fine Si phase) is dispersed in a lithium ion conductive phase (matrix). Examples of the silicon oxide include SiOₓ. X is, for example 0.5 ≤ x< 2, 0.8 ≤ x ≤ 1.6.

Preferably, in view of securing even more excellent cycle characteristics, the Si-containing material includes the above-described composite material. The lithium ion conductive phase preferably includes at least one selected from the group consisting of a SiO₂ phase and a silicate phase. The lithium ion conductive phase may further include a carbon phase. The lithium ion conductive phase may form a noncrystalline phase. The Si-containing material may include a composite material in which the silicon phase is dispersed in the SiO₂ phase, a composite material in which the silicon phase is dispersed in the silicate phase, and a composite material in which the silicon phase is dispersed in the carbon phase.

The SiO₂ phase is an amorphous phase including silicon dioxide of 95 mass% or more. The composite material in which silicon particles are dispersed in the SiO₂ phase is represented by SiOₓ, and x is, for example, in the above-described range. SiOₓ is produced by, for example, heating silicon monoxide to separate into the SiO₂ phase and a finer Si phase by disproportionation. Observing the cross section of SiOₓ particles using transmission electron microscope (TEM), the silicon phase dispersed in the SiO₂ phase can be confirmed.

Preferably, the silicate phase contains at least one of alkali metal elements (group 1 elements other than hydrogen in a long period type periodic table) and group 2 elements in a long period type periodic table. The alkali metal elements include lithium (Li), potassium (K), sodium (Na), and the like. The group 2 elements include magnesium (Mg), calcium (Ca), strontium (Sr), barium (Ba), and the like. The lithium silicate phase may have a composition represented by a formula: Li_{2y}SiO_{2+y} (0 < y< 2). Y may be 1/2 or 1. The composite material in which silicon particles are dispersed in a silicate phase can be obtained, for example, by pulverizing a mixture of silicate and a raw material silicon with stirring in a ball mill or the like to make fine particles, and then subjecting the mixture to heat treatment in an inert atmosphere.

The silicon phase content dispersed in the silicate phase may be, relative to the entire composite material, 30 mass% or more and 95 mass% or less, or 35 mass% or more and 75 mass% or less.

The carbon phase includes, for example, amorphous carbon which is less crystalline. The amorphous carbon may be, for example, graphitizable carbon (hard carbon) or non-graphitizable carbon (soft carbon). A composite material in which silicon particles are dispersed in a carbon phase can be obtained, for example, by pulverizing a mixture of a carbon source and a raw material silicon with stirring in a ball mill or the like to make fine particles, and then subjecting the mixture to heat treatment in an inert atmosphere. For example, a saccharide such as carboxy methylcellulose (CMC) or a water-soluble resin such as polyvinylpyrrolidone is used as the carbon source.

The composition of the Si-containing material can be determined, for example, by obtaining a reflected electron image of cross sections of the negative electrode mixture layer by Field Emission Scanning Electron Microscope (FE-SEM), observing the particles of the Si-containing material, and performing element analysis on the observed Si-containing material particles. For the element analysis, for example, electron beam micro analyzer (EPMA: Electron Probe Micro Analyzer) and the like are used. The above-described analysis also allows for determination of the composition of the lithium ion conductive phase.

A kind of Si-containing material may be used singly, or two or more kinds thereof may be used in combination.

The Si-containing material may be, for example, a material in a particle state. The Si-containing material has an average particle size (D50) of, for example, 1 µm or more and 25 µm or less, preferably 4 µm or more and 15 µm or less. With the above-described range, excellent battery performance can be easily obtained.

In this specification, the average particle size (D50) means a particle size (volume average particle size) at a volume integrated value of 50% in the particle size distribution measured by the laser diffraction scattering method. For example, "LA-750" manufactured by Horiba Corporation can be used as the measuring device.

In view of improvement in electrical conductivity, at least a portion of the Si-containing material particle surface may be covered with a conductive layer. The conductive layer contains a conductive material such as conductive carbon. The covering amount of the conductive layer is, for example, 1 part by mass or more and 10 parts by mass or less per 100 parts by mass of a total of the Si-containing material particles and the conductive layer. The Si-containing material particles having a conductive layer on its surface can be produced by, for example, mixing coal-pitch or the like with the Si-containing material particles, and then subjecting the mixture to a heat treatment in an inert atmosphere.

The Si-containing material goes through significant volume change with expansion and contraction during charging and discharging. Therefore, when the Si-containing material ratio in the negative electrode active material is high, cycle characteristics are easily reduced. Meanwhile, the present disclosure allows for the suppression of disconnected conductive paths and easily ensures excellent cycle characteristics, because the negative electrode mixture contains CNT with a specific amount, even if the ratio of the Si-containing material in the negative electrode active material is relatively high. The Si-containing material ratio in the negative electrode active material is preferably 4 mass% or more, or 5 mass% or more. The Si-containing material ratio is preferably 15 mass% or less, or 10 mass% or less. These lower limit values and upper limit values can be combined arbitrarily.

### (Carbon material)

Examples of the carbon material include graphite, graphitizable carbon (soft carbon), and non-graphitizable carbon (hard carbon). A kind of carbon material may be used singly, or two or more kinds thereof may be used in combination.

In particular, the carbon material is preferably graphite, because it has excellent charge/discharge stability, and has a small irreversible capacity. Examples of the graphite include natural graphite, artificial graphite, graphitized mesophase carbon particles, and the like. The graphite particles may partially include amorphous carbon, graphitizable carbon, or non-graphitizable carbon.

Graphite is a carbon material with a developed graphite type crystal structure. The plane spacing d002 between the (002) planes of the graphite measured by X-ray diffractometry may be, for example, 0.340 nm or less, or 0.3354 nm or more and 0.340 nm or less. The crystallite size Lc (002) of the graphite may be, for example, 5 nm or more, or 5 nm or more and 200 nm or less. The crystallite size Lc (002) is measured by, for example, the Scherrer method. When the plane spacing d002 of the (002) planes and the crystallite size Lc (002) of the graphite fall within the above ranges, a high capacity can be easily obtained.

The carbon material ratio in the negative electrode active material is, for example, 97 mass% or less, may be 96 mass% or less, or 95 mass% or less. The carbon material ratio in the negative electrode active material is, for example, 76 mass% or more, may be 80 mass% or more, or 85 mass% or more, or 90 mass% or more. These lower limit values and upper limit values can be combined arbitrarily.

The ratio of the Si-containing material and the carbon material in total in the negative electrode active material is preferably 90 mass% or more, 95 mass% or more, or 98 mass% or more. The Si-containing material and the carbon material in total in the negative electrode active material is 100 mass% or less. The negative electrode active material can be composed only of the Si-containing material and the carbon material.

### (CNT)

CNT is a carbon material having a structure in which a sheet (graphene) of six-membered ring network formed by carbon atoms is rolled into a tube; and has a nano-size diameter. CNT has excellent conductivity. When the layer of graphene forming the tube structure is one, it is referred to as a single-walled CNT (SWCNT). When the above-described layer is a plural number, it is referred to as a multi-walled CNT (MWCNT).

Preferably, CNT includes SWCNT. In this case, in addition to securing more excellent cycle characteristics, the effects of suppression of the electrolyte reduction by the acid anhydride can be further brought out.

The SWCNT ratio in the CNT is, for example, 50% or more, may be 75% or more, or 90% or more. The SWCNT ratio in the CNT is 100% or less. The SWCNT ratio in the CNT is a ratio of the number of SWCNTs relative to the CNT as a whole.

The presence of the CNT in the negative electrode mixture can be confirmed using, for example, images of the negative electrode mixture layer cross sections obtained by scanning electron microscope (SEM).

The SWCNT ratio in the CNT contained in the negative electrode mixture can be determined by the method below.

The negative electrode mixture layer cross sections or CNT images are obtained using SEM. Using the SEM images, a plurality of (e.g., about 50 to 200) CNTs are randomly selected and observed, and the number of the SWCNTs is determined; and the ratio of the number of the SWCNTs relative to a total number of the selected CNTs is calculated.

The CNT quantitative analysis is performed, for example, by combining Raman spectroscopy and Thermogravimetric analysis.

In view of reducing the conductive path disconnection during charging and discharging, the CNT may have an average diameter of, for example, 1 nm or more and 10 nm or less, or 1 nm or more and 5 nm or less.

In view of reducing the conductive path disconnection during charging and discharging, the CNT may have an average length of, for example, 1 µm or more and 100 µm or less, or 5 µm or more and 20 µm or less.

The average length and average diameter of the CNT can be determined from the negative electrode mixture layer cross sections or CNT images using at least one of SEM and TEM. More specifically, a plurality of CNTs (e.g., 50 to 200) are selected arbitrarily and their length and diameter are measured in the photographed image, and they are averaged, thereby determining the average length and the average diameter. The CNT length means the length of CNT when they are elongated linearly.

The CNT content in the negative electrode mixture is, for example, 0.005 mass% or more and 0.1 mass% or less, may be 0.01 mass% or more and 0.05 mass% or less, or 0.02 mass% or more and 0.05 mass% or less. By setting the CNT content in the negative electrode mixture to 0.005 mass% or more, the effects of the negative electrode conductivity improvement and improvement in capacity retention rate in the initial period of charge/discharge cycle will be significant. The effects of suppression of the electrolyte reduction are also brought out significantly by combining the negative electrode mixture including CNT with the electrolyte including an acid anhydride. Meanwhile, by setting the CNT content in the negative electrode mixture to 0.1 mass% or less (even to 0.05 mass% or less), the effects of suppression of the electrolyte reduction by the acid anhydride can be brought out significantly.

### (Others)

For the binder, for example, a resin material is used. For the binder, for example, fluorine resin (e.g., polytetrafluoroethylene, polyvinylidene fluoride), polyolefin resin (e.g., polyethylene, polypropylene), polyamide resin (e.g., aramid resin), polyimide resin (e.g., polyimide, polyamide-imide), acrylic resin (e.g., polyacrylic acid, polymethacrylic acid, acrylic acid-methacrylic acid copolymer, ethylene-acrylic acid copolymer, or a salt thereof), vinyl resin (e.g., polyvinyl acetate), and rubber materials (e.g., styrene -butadiene copolymer rubber (SBR)) are used. A kind of binder may be used singly, or two or more kinds thereof may be used in combination.

Examples of the thickener include a cellulose derivative such as cellulose ether. Examples of the cellulose derivative include CMC and modified CMC, and methyl cellulose. The modified CMC includes a CMC salt. Examples of the salt include alkali metal salt (e.g., sodium salt) and ammonium salt. A kind of thickener may be used singly, or two or more kinds thereof may be used in combination.

Examples of the conductive material other than CNT include conductive fiber and conductive particles other than CNT. Examples of the conductive fiber include carbon fibers and metal fibers. Examples of the conductive particles include conductive carbon (carbon black, etc.) and metal powder. A kind of the conductive material may be used singly, or two or more kinds thereof may be used in combination.

The negative electrode current collector is selected in accordance with the types of the non-aqueous electrolyte secondary battery. The negative electrode current collector may be a sheet type. For the current collector, metal foil may be used. For the current collector, porous materials can also be used. Examples of the porous current collector include net, punched sheet, and expanded metal.

For the material of the negative electrode current collector, stainless steel, nickel, nickel alloy, copper, copper alloy, or the like can be exemplified.

The negative electrode current collector has a thickness of, without particular limitation, for example, 1 to 50 µm and 5 to 30 µm.

The negative electrode can be formed, for example, by applying a negative electrode slurry in which the negative electrode mixture components are dispersed in a dispersion medium on a surface of a negative electrode current collector and drying the slurry. The dried coating film may be rolled, if necessary.

Examples of the dispersion medium include, without particular limitation, water, alcohol (e.g., ethanol), ether (e.g., tetrahydrofuran), amide (e.g., dimethylformamide), N-methyl-2-pyrrolidone (NMP), or a solvent mixture thereof.

### (Positive Electrode)

The positive electrode may include a positive electrode current collector, and a positive electrode mixture layer supported on a surface of the positive electrode current collector. The positive electrode mixture layer can be formed by applying a positive electrode slurry in which the positive electrode mixture is dispersed in a dispersion medium on a surface of the positive electrode current collector, and drying the slurry. The dried coating film may be rolled, if necessary. The positive electrode mixture contains the positive electrode active material as an essential component, and may contain a binder and a conductive material as optional components. For the dispersion medium, for example, it can be selected from those exemplified for the negative electrode.

As the positive electrode active material, for example, a composite oxide containing lithium and a transition metal is used. Examples of the transition metal include Ni, Co, and Mn. Examples of the composite oxide containing lithium and a transition metal include LiₐCoO₂, LiₐNiO₂, LiₐMnO₂, LiₐCo_{b1}Ni_{1-b1}O₂, LiₐCo_{b1}M_{1-b1}O_{c1}, LiₐNi_{1-b1}M_{b1}O_{c1}, LiₐMn₂O₄, and LiₐMn_{2-b1}M_{b1}O₄. Here, a = 0 to 1.2, b1 = 0 to 0.9, and c1 = 2.0 to 2.3. M is, for example, at least one selected from the group consisting of Na, Mg, Sc, Y, Mn, Fe, Co, Ni, Cu, Zn, Al, Cr, Pb, Sb, and B. Note that the value "a" indicating the molar ratio of lithium is increased or decreased by charging and discharging.

In particular, a lithium nickel composite oxide represented by LiₐNi_{b2}M_{1-b2}O₂ (0 < a ≤ 1.2, 0.3 ≤ b2 ≤ 1, M is at least one selected from the group consisting of Mn, Co, and Al) is preferable. In view of increasing the capacity, it is more preferable to satisfy 0.85 ≤ b2 ≤ 1. In view of stability of the crystal structure, LiₐNi_{b2}Co_{c2}Al_{d}O₂(0 < a ≤ 1.2, 0.85 ≤ b2 < 1, 0 < c2 ≤ 0.15, 0 < d ≤ 0.1, b2+ c2+ d = 1) is more preferable.

Examples of the binder include the resin material given as examples for the negative electrode. For the conductive material, for example, it can be selected from those exemplified for the negative electrode. For the conductive material, graphite may be used.

The shape and thickness of the positive electrode current collector can be selected from the shape and range exemplified for the negative electrode current collector. Examples of the material for the positive electrode current collector include stainless steel, aluminum, aluminum alloy, titanium, or the like.

### (Electrolyte)

The electrolyte is usually used in a liquid state, but it can be in a state in which its flowability is limited by a gelling agent. The electrolyte usually includes a non-aqueous solvent, and a lithium salt dissolved in the non-aqueous solvent, and also an additive. In this specification, the acid anhydride and sulfur-containing compounds are categorized into additives. The chain carboxylate is categorized into non-aqueous solvents.

### (Non-aqueous solvent)

As the non-aqueous solvent, a cyclic carbonate, a chain carbonate, a cyclic carboxylate, and a chain carboxylate are exemplified. Examples of the cyclic carbonate include propylene carbonate (PC), ethylene carbonate (EC), fluoroethylene carbonate (FEC), and vinylene carbonate (VC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate (MA), ethyl acetate, propyl acetate, methyl propionate, ethyl propionate, and propyl propionate. The electrolyte may contain one type of non-aqueous solvent, or two or more types may be used in combination.

When the electrolyte includes FEC or chain carboxylate, side reactions are easily caused when combined with the negative electrode mixture including CNT. However, even in such a case, the effects of the use of the acid anhydride are brought out clearly. Thus, side reactions are suppressed, and excellent cycle characteristics can be ensured. When the electrolyte includes at least MA as the chain carboxylate or FEC, such effects are brought out even more significantly.

### (Lithium salt)

Examples of the lithium salt includes LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, phosphoric acid salt, borate, and imide salt. Examples of the phosphoric acid salt include lithium difluorophosphate (LiPO₂F₂), lithium difluorobis(oxalate)phosphate (LiDFBOP), and lithium tetrafluoro(oxalate)phosphate. Examples of the borate include lithium bis(oxalate)borate (LiBOB), and lithium difluoro(oxalate)borate (LiDFOB). Examples of the imide salt include lithium bis(fluorosulfonyl)imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). The electrolyte may contain one type of lithium salt, or two or more types in combination.

When the electrolyte include lithium bis(fluorosulfonyl)imide (LiFSI), side reactions are easily caused when combined with the negative electrode mixture including CNT. However, even in this case, the effects of using the acid anhydride can be brought out significantly. Therefore, side reactions are suppressed, and excellent cycle characteristics can be ensured.

The electrolyte has a lithium salt concentration of, for example, 0.5 mol/L or more and 2 mol/L or less.

### (Sulfur-containing compound)

Examples of the sulfur-containing compound include at least one selected from the group consisting of sulfate, sulfite, and sulfonate. Sulfate has a -O-S (= O)₂-O- structure. Sulfate may be cyclic, chain, or may form a salt. Sulfite has a -O-S (= O)-O- structure. Sulfite may be cyclic, chain, or may form a salt. Sulfonate has a -S (= O)₂-O- structure. Sulfonate may be cyclic, chain, or may form a salt. The electrolyte may include one type of sulfur-containing compound, or two or more can be used in combination.

Preferably, sulfate is C₂₋₄ alkyl sulfate. Specifically, ethylene sulfate, propylene sulfate, trimethylene sulfate, butylene sulfate, vinylene sulfate, ethyl sulfate salt, and methyl sulfate salt may be used.

Preferably, sulfite is C₂₋₄ alkylene sulfite. Specifically, ethylene sulfite (ES), propylene sulfite, tri methylene sulfite, butylene sulfite, and vinylene sulfite may be used.

Preferably, sulfonate includes at least one selected from the group consisting of C₃₋₅ alkane sultone and C₃₋₅ alkene sultone. Specifically, 1,3-propane sultone, 1,4-butane sultone, and 1,3-propene sultone may be used.

In the sulfur-containing compound, one, or two or more hydrogen atoms in the compound shown as examples above may be replaced with a substituent. Examples of the substituent include an alkyl group, hydroxy alkyl group, hydroxy group, alkoxy group, and halogen atom. The substituent has 1 to 4, or 1 to 3 carbon atoms. Examples of the halogen atom include chlorine atoms and fluorine atoms.

In the electrolyte, the sulfur-containing compound content is, for example, 5 mass% or less, may be 3 mass% or less, or may be 2 mass% or less. The sulfur-containing compound content within such a range increases the effects of suppressing the electrolyte decrease even more. In this case, because the electrolyte viscosity is kept low, and charge/discharge reactions can be progressed even more homogeneously, it is considered that the electrolyte consumption is suppressed as a whole.

In non-aqueous electrolyte secondary batteries, the sulfur-containing compound content in the electrolyte changes during storage period or charge/discharge cycles. Therefore, the sulfur-containing compound with a concentration of detection limit or more in the electrolyte taken out from the non-aqueous electrolyte secondary batteries will suffice. In the electrolyte, the sulfur-containing compound content may be 0.01 mass% or more, 0.1 mass% or more, or 0.5 mass% or more.

In the electrolyte used for non-aqueous electrolyte secondary battery production, the sulfur-containing compound content may be 0.1 mass% or more, 0.3 mass% or more, or 0.5 mass% or more. In the electrolyte used for non-aqueous electrolyte secondary battery production, the sulfur-containing compound content is, for example, 5 mass% or less, 3 mass% or less, or 2 mass% or less. These lower limit values and upper limit values can be combined arbitrarily.

The electrolyte may include other additives. Such additives are, for example, vinyl ethylene carbonate and cyclohexylbenzene.

### (Separator)

Usually, it is desirable to interpose a separator between the positive electrode and the negative electrode. The separator has excellent ion permeability and suitable mechanical strength and electrically insulating properties. For the separator, for example, a microporous film, woven cloth, or nonwoven fabric, or at least two selected from these made into a laminate may be used. Preferably, the separator material is polyolefin (e.g., polypropylene, polyethylene).

### (Others)

In an example structure of the non-aqueous electrolyte secondary battery, an electrode group is accommodated in an outer case along with an electrolyte, and in the electrode group, a positive electrode and a negative electrode are wound with a separator interposed therebetween. The structure is not limited to this, and other forms of electrode group may be used. For example, a laminated electrode group may be used, in which the positive electrode and the negative electrode are laminated with a separator interposed therebetween. The form of the non-aqueous electrolyte secondary battery is not limited as well, and for example, cylindrical, prismatic, coin, button, and laminated types are used.

FIG. 1 is a schematic partially cutaway oblique view of a prismatic non-aqueous electrolyte secondary battery in an embodiment of the present disclosure. The battery includes a bottomed rectangular battery case 4, and an electrode group 1 and an electrolyte accommodated in the battery case 4. The electrode group 1 has a negative electrode in the form of a long strip, a positive electrode in the form of a long strip, and a separator interposed therebetween. The negative electrode current collector of the negative electrode is electrically connected to a negative electrode terminal 6 provided in a sealing plate 5 through a negative electrode lead 3. The negative electrode terminal 6 is insulated from the sealing plate 5 with a resin-made gasket 7. The positive electrode current collector of the positive electrode is electrically connected to a rear face of the sealing plate 5 through a positive electrode lead 2. That is, the positive electrode is electrically connected to the battery case 4 also serving as a positive electrode terminal. The periphery of the sealing plate 5 is fitted to the open end of the battery case 4, and the fitting portion is laser welded. The sealing plate 5 has an injection port for the electrolyte, and is plugged with a sealing plug 8 after injection.

### [Examples]

In the following, the present disclosure will be described in detail based on Examples and Comparative Examples, but the present invention is not limited to Examples below.

<Examples 1 to 7 and Comparative Examples 1 to 7 >

A non-aqueous electrolyte secondary battery was made and evaluated as follows.

### (1) Preparation of negative electrode

A suitable amount of water was added to a negative electrode mixture, and stirred, thereby producing a negative electrode slurry. For the negative electrode mixture, a mixture of a negative electrode active material, a binder, and a conductive material was used.

For the negative electrode active material, a mixture of a Si-containing material and graphite (average particle size (D50) 25 µm) was used. Li_{2y}SiO_{2+y} particles (y = 0.5, average particle size (D50) 10 µm) whose surface is covered with a conductive layer containing conductive carbon, and SiOₓ particles (x = 1, average particle size (D50) 5 µm) whose surface is covered with a conductive layer containing conductive carbon were used for the Si-containing material. The mass ratio of Li_{2y}SiO_{2+y} particles excluding the conductive layer and SiOₓ particles excluding the conductive layer was set to 1:1. In the negative electrode active material, the mass ratio of the Si-containing material excluding the conductive layer and graphite was set to 6:94.

Sodium polyacrylate (PAA-Na), CMC sodium salt (CMC-Na), and SBR were used for the binder. For the conductive material, a CNT containing 90% or more of SWCNT (average diameter about 1.6 nm, average length about 5 µm) was used.

The CNT content in the negative electrode mixture is set to the value shown in Table 1. In the negative electrode mixture, the PAA-Na content, the CMC-Na content, and the SBR content were set to 1 mass%.

Next, the negative electrode slurry was applied to a surface of copper foil, dried and then rolled to form a negative electrode mixture layer (thickness 80 µm, density 1.6 g/cm³) on both sides of the copper foil, thereby producing a negative electrode.

### (2) Preparation of positive electrode

To 95 parts by mass of lithium-containing composite oxide (LiNi_{0.8}Co_{0.18}Al_{0.02}O₂), 2.5 parts by mass of acetylene black, 2.5 parts by mass of polyvinylidene fluoride, and a suitable amount of NMP were added and mixed, thereby preparing a positive electrode slurry. Then, the positive electrode slurry was applied to an aluminum foil surface, and the coating film was dried, and then rolled to form a positive electrode mixture layer (thickness 95 µm, density 3.6 g/cm³) on both sides of aluminum foil, thereby producing a positive electrode.

### (3) Preparation of electrolyte

To a solvent mixture (EC: DMC: MA = 20:60:20(volume ratio)) of EC, DMC, and MA, LiPF₆ and as necessary the additive shown in Table 1 was dissolved, thereby preparing an electrolyte. The electrolyte had a LiPF₆ concentration of 1.35 mol/L. The electrolyte had an additive concentration (initial concentration) of the values shown in Table 1 (mass%).

### (4) Production of non-aqueous electrolyte secondary battery

An Al-made positive electrode lead was attached to the positive electrode produced as described above, and a Ni-made negative electrode lead was attached to the negative electrode produced as described above. The positive electrode and the negative electrode were wound with a polyethylene thin film (separator) interposed therebetween into a spiral shape in an inert gas atmosphere, thereby producing a wound-type electrode group. The electrode group was accommodated in a bag-type outer package formed of a laminate sheet including an Al layer, a predetermined amount of the above-described electrolyte was injected, and then the outer package was sealed, thereby producing a non-aqueous electrolyte secondary battery. Upon accommodating the electrode group in the outer package, a portion of the positive electrode lead and a portion of the negative electrode lead were allowed to be exposed to the outside of the outer package.

### (Evaluation)

The non-aqueous electrolyte secondary batteries were subjected to charge/discharge cycles, and the amount of the electrolyte remained and capacity retention rate were determined after the cycles as follows.

Constant current charging was performed at an electric current of 0.5C (180mA) until the voltage reached 4.2 V, and thereafter, constant voltage charging was performed at a voltage of 4.2 V until the current reached 0.05C (18mA) under an environment of 45°C. After a 10 minutes rest, the non-aqueous electrolyte secondary batteries were subjected to constant current discharging at a current of 0.7 C (252 mA) until the voltage reached 2.5 V. The discharge capacity (Ci) at this time was determined. Setting such a set of charging, resting, and discharging as one cycle, and the cycle was repeated to 400 cycles, and a discharge capacity (Cc) at 400th cycle was determined. The ratio (%) of the discharge capacity Cc setting the initial discharge capacity Ci to 100% was determined as capacity retention rate.

Also, the non-aqueous electrolyte secondary battery after 400 cycles was decomposed, and the remained electrolyte was collected to determine their volume. The ratio of the remaining electrolyte volume (%) was calculated setting the initial electrolyte volume to 100%. Table 1 shows the ratio as the remaining electrolyte amount (%).

Table 1 shows the results of Examples and Comparative Examples. Table 1 also shows the CNT content in the negative electrode mixture (mass%), the types and amount of additive added to the electrolyte (mass%). In Table 1, E1 to E7 are Examples 1 to 7, and C1 to C7 are Comparative Examples 1 to 7.

The additives in the Table are shown below.
MAL: maleic anhydride
SUC: succinic anhydride
ES: ethylene sulfite
LiFSI: lithium bis(fluorosulfonyl)imide
FEC: fluoroethylene carbonate

In the batteries E5, and C5, the LiPF₆ concentration was decreased from 1.35 mol/L to 1.25 mol/L, and instead LiFSI was added with a concentration of 0.10 mol/L.

In the batteries E6 and C6, 50 vol% of EC was replaced with FEC.

**Table 1]**

| | CNT Content (mass%) | Additive | Additive Content (mass%) | Remarks | Remaining Electrolyte amount(%) | Capacity retention rate (%) |
|---|---|---|---|---|---|---|
| E1 | 0.04 | MAL | 1 | | 75.4 | 79.5 |
| E2 | 0.04 | SUC | 1 | | 73.8 | 79.5 |
| E3 | 0.04 | MAL | 0.5 | | 75.0 | 79.3 |
| E4 | 0.04 | SUC | 0.5 | | 73.7 | 79.4 |
| E5 | 0.04 | MAL | 1 | LiFSI added | 75.0 | 79.3 |
| E6 | 0.04 | MAL | 1 | Contained FEC | 74.6 | 79.3 |
| E7 | 0.04 | MAL | 1 | ES added | 74.8 | 79.2 |
| C1 | 0 | - | 0 | | 74.5 | 77.9 |
| C2 | 0.04 | - | 0 | | 71.2 | 77.7 |
| C3 | 0 | MAL | 1 | | 75.0 | 78.2 |
| C4 | 0 | SUC | 1 | | 74.6 | 77.9 |
| C5 | 0 | - | 0 | LiFSI added | 74.4 | 78.2 |
| C6 | 0.04 | - | 0 | Contained FEC | 70.8 | 77.7 |
| C7 | 0 | - | 0 | ES added | 74.4 | 78.4 |

Table 1 shows that when the negative electrode mixture includes the CNT, the remained electrolyte amount decreased by 3.3% (comparison with C1 and C2) compared with the case where the CNT was not included. When the negative electrode mixture does not include the CNT, even if the acid anhydride was added to the electrolyte, the remaining electrolyte amount shows almost no change (C3 + 0.5%, C4 + 0.1% relative to C1). In other words, when the negative electrode mixture does not include CNT, the acid anhydride does not contribute much to the suppression of the electrolyte decrease.

Meanwhile, when the electrolyte including the acid anhydride is combined with the negative electrode mixture including CNT, the effects of the suppression of the electrolyte decrease are brought out. Specifically, compared with C2 in which the electrolyte including no acid anhydride was used, in E1 to E7, the remaining electrolyte amount can be ensured to a level that equals to the case where the negative electrode mixture include no CNT (E1 + 4.2%, E2 + 2.6%, E5 + 3.8%, E6 + 3.4%, E7 + 3.6% relative to C2).

Comparing C1 with C5, in both of which no CNT was used, when using LiFSI, decrease in the electrolyte was more significant (C5 -0.1% relative to C1). On the other hand, comparing E5 with C5, even when CNT was used, use of the acid anhydride allows for a remaining electrolyte amount of significantly more than the case with C5, in which no CNT was used (E5 + 0.6% relative to C5). Comparing E7 with C7, even when ES was used, the same tendency can be seen.

Comparing C2 with C6, both of which CNT was used, when FEC was used, the decrease in the electrolyte was more significant (C6 -0.4% relative to C2). On the other hand, comparing E6 with C6, use of acid anhydride allows for ensuring the remaining electrolyte amount (E6 + 3.8% relative to C6) more than C1 in which no CNT was used (+ 0.1% relative to C1), and improves greatly compared with C6.

Furthermore, in E1 to E7, compared with the case where CNT was not used or the acid anhydride was not used, a high capacity retention rate was ensured, and even when at the point where a high temperature (45°C) charge/discharge was repeated 400 cycles, excellent capacity retention rate was achieved (comparison with C 1 to C7 and E1 to E7). This is probably because the negative electrode mixture including CNT, allowed for suppression of conductive path disconnection in the negative electrode mixture when charge/discharge are repeated, and the use of the acid anhydride suppressed side reactions when the negative electrode mixture includes CNT, and electrons are prioritized for use for charge/discharge reaction.

When the CNT content in the negative electrode mixture was 0.005 mass% or more and 0.1 mass% or less, the same tendency as described above was achieved.

### [Industrial Applicability]

The non-aqueous electrolyte secondary battery according to the present disclosure is useful for a main power source of a mobile communication device, a portable electronic device, or the like. However, application of the non-aqueous electrolyte secondary battery is not limited to these.

### [Reference Signs List]

1 Electrode Group
2 Positive Electrode Lead
3 Negative Electrode Lead
4 Battery Case
5 Sealing Plate
6 Negative Electrode Terminal
7 Gasket
8 Sealing Plug

## Claims

1. A non-aqueous electrolyte secondary battery comprising a positive electrode, a separator, a negative electrode facing the positive electrode with the separator interposed therebetween, and an electrolyte, wherein
the electrolyte includes an acid anhydride,
the negative electrode includes a negative electrode mixture including a negative electrode active material and a carbon nanotube, and
the negative electrode active material includes a silicon-containing material and a carbon material.

2. The non-aqueous electrolyte secondary battery of claim 1, wherein the electrolyte contains 5 mass% or less of the acid anhydride.

3. The non-aqueous electrolyte secondary battery of claim 1 or 2, wherein the acid anhydride has a carbon-carbon unsaturated bond.

4. The non-aqueous electrolyte secondary battery of any one of claims 1 to 3, wherein the acid anhydride includes maleic anhydride.

5. The non-aqueous electrolyte secondary battery of any one of claims 1 to 4, wherein the carbon nanotube includes a single wall carbon nanotube.

6. The non-aqueous electrolyte secondary battery of claim 5, wherein 90% or more of the carbon nanotube is the single wall carbon nanotube.

7. The non-aqueous electrolyte secondary battery of any one of claims 1 to 6, wherein the negative electrode mixture has a carbon nanotube content of 0.005 mass% or more and 0.1 mass% or less.

8. The non-aqueous electrolyte secondary battery of any one of claims 1 to 7, wherein the electrolyte includes a chain carboxylate.

9. The non-aqueous electrolyte secondary battery of claim 8, wherein the chain carboxylate includes at least methyl acetate.

10. The non-aqueous electrolyte secondary battery of any one of claims 1 to 9, wherein the electrolyte includes a sulfur-containing compound.

11. The non-aqueous electrolyte secondary battery of claim 10, wherein the sulfur-containing compound includes at least one selected from the group consisting of sulfate, sulfite, and sulfonate.

12. The non-aqueous electrolyte secondary battery of claim 10 or 11, wherein the electrolyte contains 5 mass% or less of the sulfur-containing compound.

13. The non-aqueous electrolyte secondary battery of any one of claims 1 to 12, wherein a ratio of the silicon-containing material in the negative electrode active material is 4 mass% or more.
